Europäisches Patentamt

European Patent Office

Office européen des brevets

(19)

(11) Publication number : **0 406 985 B1**

# EUROPEAN PATENT SPECIFICATION

(12)

(45) Date of publication of patent specification :
**22.07.92 Bulletin 92/30**

(51) Int. Cl.⁵ : **H04M 1/72, H04Q 7/04,
H04B 7/26**

(21) Application number : **90202286.2**

(22) Date of filing : **17.01.90**

(54) **Radio telephone.**

(30) Priority : **17.03.89 GB 8906218**

(43) Date of publication of application :
**09.01.91 Bulletin 91/02**

(60) Publication number of the earlier application in
accordance with Art. 76 EPC : **0 378 450**

(45) Publication of the grant of the patent :
**22.07.92 Bulletin 92/30**

(84) Designated Contracting States :
**DE DK FR GB SE**

(56) References cited :
**EP-A- 0 301 740
EP-A- 0 310 876
EP-A- 0 369 110
FR-A- 2 613 562
US-A- 4 680 787**

(73) Proprietor : **TECHNOPHONE LIMITED
Ashwood House Pembroke Broadway
Camberley Surrey GU15 3SP (GB)**

(72) Inventor : **Grimmett, Alan Charles
9 Kingfisher Drive, Merrow Park
Guildford, Surrey GU4 7EA (GB)**
Inventor : **Martensson, Nils Erik
Long Acre, Hook Heath Gardens
Woking, Surrey GU22 0QG (GB)**
Inventor : **O'Neill, Simon Philip
34 Stratfield, Woodenhill
Bracknell, Berks RG12 4WT (GB)**
Inventor : **Wilkins, Roger
Armdale, Chineham Lane, Sherborne St. John
Basingstoke, Hants RG24 9LR (GB)**

(74) Representative : **Frain, Timothy John
Technophone Limited Intellectual Property
Manager Ashwood House Pembroke
Broadway
Camberley, Surrey GU15 3SP (GB)**

EP 0 406 985 B1

## Description

This application is a divisional of published European patent application No. 0,378,450 (Our ref: PAT 89002aEP).

The present invention relates to a radio telephone system, particularly but not exclusively a cellular radio telephone system, comprising a host telephone and handset means containing a number assignment module (NAM) in which is stored a unique telephone number.

By way of background explanation, the cellular radio telephone system divides a geographical area into a plurality of adjoining cells each including a stationary transmitting and receiving base station connected to the conventional fixed-wire telephone network. Each cell is designed to allow a cellular telephone within the cell to access the fixed-wire network, and vice versa. Hence, the particular cell which receives the transmitting and/or receiving signal of a cellular telephone is the cell which is made operative for transmitting and/or receiving the call. So, for example, when a cellular telephone user attempts to make a call, the cell whose base station receives the strongest signal will be the one which effects the connection for that call. If the cellular telephone then moves beyond the effective range of the cell originally handling the call, another cell which receives the signal more strongly will become operative by an automatic transfer or 'hand-over' system. Hand-over may occur many times during a call depending on the distance travelled by the telephone and the number of effective cells through which the telephone passes.

Each cellular telephone includes a call-channel selector which controls a frequency synthesizer to span the available call channel frequencies and, in combination with a microprocessor, selects the call-channel received most strongly, ie. from the cell base station closest to the telephone.

Cellular radio telephones fall into two main categories, namely mobiles and hand portables, although there is also an intermediate category known as transportables. As the name implies, a hand portable telephone is relatively lightweight and small in size and operates from an internal, rechargeable battery pack so that it may readily be carried around by the user. A mobile telephone, on the other hand, is permanently installed in a vehicle and operates from the vehicle's own (higher voltage) power supply. A mobile has the advantage over a hand portable that it can transmit at a higher power level, but a hand portable has the advantage that the user does not need to be in or near a vehicle to use the telephone, since it can be used anywhere within range of a base station. Unlike a mobile telephone, however, a hand portable does have the drawback of having a limited stand-by and call time before the internal battery pack needs to be recharged. Thus, mobiles and hand portables each have their own particular benefits, and it is not uncommon for a subscriber to have both types of telephone, each with its own unique identity, that is to say the mobile telephone would have one telephone number and the hand portable would have a different telephone number, each with its own billing account. Alternatively, a hand portable telephone may be used in the vehicle with a special booster unit operated from the vehicle's power supply, but this involves additional apparatus and more expense.

Conventionally, each cellular telephone - whether mobile or hand portable - has its own unique telephone number by which it may be accessed from other cellular telephones or fixed-wire conventional telephones. The full telephone number is stored in a memory, e.g. a ROM, PROM or RAM known in the art as a 'number assignment module' (NAM) coupled to the control circuits, usually a microprocessor, of the cellular telephone. In the case of mobile telephones the NAM is traditionally contained in the so-called transceiver unit located in a convenient (usually concealed) place separate and remote from the handset, the handset being connected to the transceiver unit.

It is noted that the terms 'number assignment module' and 'NAM' as used herein encompass any memory means, not necessarily modular in form, nor dedicated to the NAM function, in which information pertaining to the identity of the telephone, specifically the telephone number, is stored.

U.S. Patent No. 4,677,653 and U.S. Patent No. 4,734,928 disclose an adapter for a cellular mobile telephone which converts the telephone to have any one of several different telephone numbers selected manually by the user. The adapter is provided with a plurality of number assignment modules (i.e. NAMs) in the form of respective ROMs, each storing a unique telephone number. The ROMs (or NAMS) are mounted on a main circuit board in a housing separate from the telephone unit. Each NAM is connected to a multi-position switch so that a selected one of the NAMs may be coupled to the microprocessor of the telephone to change the telephone number. These U.S. Patents essentially extend the concept of a cellular telephone having its own unique telephone number by teaching that each telephone may indeed be adapted to have several unique numbers, any one of which may be active (all the others being dormant) at any one time and the user would have a different billing account for each number. Although the same principle could also be applied to hand portable telephones, the overriding doctrine remains to provide cellular telephones with exclusive telephone numbers, that is to say each telephone either has its own individual telephone number or a unique set of telephone numbers exclusive to that particular telephone.

In the neighbouring art of cordless radio telephones, British Patents Nos. 2,154,395 and 2,159,372 disclose an arrangement of handset and base unit, in which the base unit automatically generates and stores an identification code, and then transmits the same code to the handset over the air. The handset stores the code in memory. When an incoming or outgoing call is initiated, the two identification codes stored in the base unit and the handset, respectively, are compared and only if they match is the call allowed to proceed. The identification codes stored in the base unit and handset are thus provided for security purposes i.e. to prevent crosstalk and the risk of wire tapping in that they prevent a handset being used with any base unit other than its intended partner. Provision is made to enable a plurality of handsets to be operable with a common base unit, but each of the handsets can be used only with the particular base unit (or units) to which it is paired and no other. Moreover, in the case of cordless telephones it is noted that the base unit and the handset, although separate, constitute a single telephone and therefore only have one unique telephone number associated therewith. Furthermore, it is noted that this telephone number does not need to be stored in memory within any part of the telephone since the base unit is connected to the fixed-wire telephone network and hence can be addressed in the conventional manner. There is therefore no equivalent of a number assignment module in the case of a cordless telephone.

US-A-4,680,787 discloses a portable radio telephone which can be inserted into a passive vehicle-mounted converter coupled to a remote handset, enabling the portable telephone to share the vehicle's battery and antenna. The portable telephone may be operated from the remote handset.

EP-A-0,310,876, which is relevant only to the extent prescribed by Article 54(3) and (4) EPC, discloses a mobile and portable radio telephone each having its own telephone number. The portable may be coupled to the mobile whereupon the telephone number of the portable is transferred to the mobile for subsequent communication.

FR-A-2,613,562 discloses a transportable radio telephone having a handset which is permanently connected to a connection housing. The connection housing is removably connected to the main housing of the telephone and encloses a memory for the storage of individual and personal data which may include the subscriber number. The handset includes a display. The information stored in the handset memory can be displayed on the handset display under the control of a microprocessor in the main housing.

According to a first aspect of the present invention there is provided a radio telephone for communicating on a radio system having at least one fixed site and a plurality of radio telephones, the radio telephone comprising host radio telephone means, handset means and means for intercoupling the handset means and the host radio telephone means whereby information may be transferred therebetween, wherein the handset means is operative for radio communication with a fixed site only when coupled to the host radio telephone means, characterised in that the handset means contains memory means, specifically a number assignment module (NAM), for storing a number identifying the handset means, and in that the intercoupling means permit the identifying number to be transferred between the handset means and the host radio telephone means whereby the host radio telephone means automatically assumes the identifying number of the handset means for communicating with a fixed site when the handset means and the host radio telephone means are intercoupled.

In a radio telephone in accordance with the invention the handset means lends its own inherent identity (telephone number(s)) to the host telephone means while the handset means is temporarily connected to the host. Hence, a common host may be used by any number of different subscribers having their own handset means and they will each be able to make and receive calls on their own personal telephone numbers and the charges for using the system can be levied to the respective subscriber's billing account. Conversely, an individual subscriber may connect his personal handset means to any convenient host telephone means and he will be able to make and receive calls on his personal telephone number and, furthermore, the charges for using the system can be levied to his particular billing account.

The host telephone means may contain its own NAM and so be fully operable as a telephone in its own right with its own unique telephone number. Nevertheless, whenever a handset means containing its own NAM in accordance with the invention is connected thereto, the host will automatically assume the telephone number of the handset means regardless of its own inherent number.

In a preferred embodiment the radio telephone system includes means capable of detecting the connection of the handset means to the host telephone means, wherein the host telephone means comprises control circuitry to which the NAM of the host telephone means is coupled, and switching means responsive to the detecting means which disconnect the NAM of the host telephone means from the control circuitry when the handset means is connected to the host telephone means. The host thus behaves schizophrenically, resuming its own inherent telephone number when the handset means is disconnected, but assuming the identity of the handset means when the handset means is connected. Such a switching means is not, however, essential. Without it, the host telephone may operate with both telephone numbers simultaneously when the handset means is connected.

In one embodiment the host telephone may be arranged to read the NAM information directly from the handset means whenever the handset means is connected to the host. In an alternative embodiment, the host telephone comprises memory means for storing NAM information from the handset means, and means are provided for transferring information from the NAM of the handset means to the memory means automatically when the handset means is connected to the host.

Means may also be provided for erasing the information stored in the memory means automatically when the handset means is disconnected from the host. Fresh NAM information can thus be stored in the memory means the next time a handset means is connected to the host telephone. Additionally, the handset means may comprise memory means for storing variable information, such as abbreviated dialling codes or frequently used telephone numbers entered by the subscriber, and the host telephone may comprise a corresponding memory, means being provided to download information from the memory means in the handset means to the corresponding memory in the host telephone automatically when the handset means is connected to the host telephone. Similarly, information may be transferred from the host telephone to the handset means.

According to another aspect of the invention there is provided host radio telephone as recited in claim 8 below.

According to another aspect of the invention there is provided a telephone handset as recited in claim 9 below.

Embodiments of the invention will now be described, by way of example, with reference to the accompanying drawings, in which:

Figure 1 illustrates schematically a cellular radio telephone system comprising interconnected mobile and portable telephones,

Figure 2 illustrates schematically an embodiment of the invention,

Figure 3 illustrates a radio telephone system similar to that in Figure 1, and

Figure 4 illustrates a further similar radio telephone system.

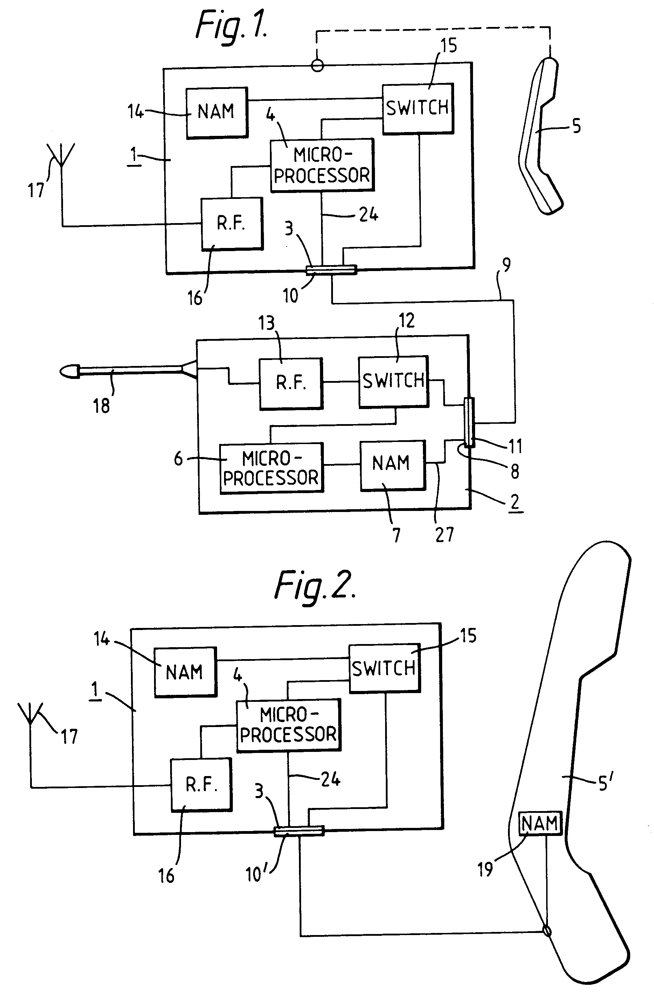

Referring to Figure 1, there is shown schematically a mobile cellular radio telephone 1 connected to a hand portable cellular radio telephone 2. As is conventional, the mobile telephone comprises a transceiver with R.F. circuits 16 connected to an external antenna 17 and coupled to a microprocessor 4. The mobile telephone has its own inherent telephone number by virtue of a NAM 14 contained within the main unit of the mobile telephone. A dedicated handset 5 is connected to the main unit in known manner. However, unlike conventional mobile apparatus, the present mobile telephone has an external connector 3, e.g. an 18 pin socket 3, known per se, coupled to the microprocessor 4 of the mobile telephone by an internal data link 24 and the NAM 14 is coupled to the microprocessor 4 via a switch 15 as explained in more detail below.

The hand portable telephone 2 comprises its own microprocessor 6 and a NAM 7 coupled thereto containing the telephone number of the hand portable unit. The NAM 7 is connected by an internal data link 27 to an external connector 8, e.g. an 18 pin socket, on the outer casing of the hand portable telephone 2.

The hand portable and mobile telephones are mutually connected by a wire (electrical) data link 9 having plugs 10 and 11 at opposite ends which mate with sockets 3 and 8 in the mobile and hand portable telephones respectively. A conventional logical switch 12 within the hand portable telephone 2 detects when connection is made to the mobile telephone 1 and disables the R.F. circuits 13 of the hand portable so that the hand portable ceases to operate as an independent radio telephone. When the telephones 1 and 2 are disconnected the switch 12 reconnects the R.F. circuits so that the hand portable telephone 2 resumes normal operation.

When the two telephones 1 and 2 are connected as shown in Figure 1, the NAM 7 of the hand portable telephone 2 is coupled via a fixed-wire electrical datalink 9, to the microprocessor 4 of the mobile telephone 1. The microprocessor 4 thus has direct access to the telephone number information stored in NAM 7. Also, the NAM 14 of the mobile telephone 1 is coupled to the microprocessor 4 via a conventional logical switch 15 which detects whether or not a hand portable telephone 2 is connected. When the hand portable is connected the switch 15 is opened to disconnect internal NAM 14 so that the microprocessor 4 only has access to the information in the NAM 7 of the hand portable telephone 2, but not to the NAM 14 of the mobile 1. The mobile thus assumes the identity of the hand portable telephone. When the hand portable is disconnected, however, the switch 15 is closed to couple the internal NAM 14 to the microprocessor 4 whereby the mobile resumes its own inherent telephone number.

The hand portable telephone 2 may be used as the handset for the mobile, in which case the audio circuits (not shown) remain operational when the telephones are connected, and this avoids the need for using the dedicated handset 5. However, the hand portable unit may be inconvenient and cumbersome to use as a handset inside a vehicle, because of its relatively heavy weight, fixed antenna, and trailing connector lead 9, in which case the dedicated handset 5, or a conventional so-called "hands-free" apparatus, permanently connected to the mobile unit 1, may be utilised. In this case the audio circuits of the hand portable telephone 2 may also be disabled when the two telephones are connected together.

Figure 2 shows an embodiment in which an ancillary handset 5' is removably connected to the mobile telephone 1 via a connector 10'. The handset 5' contains its own NAM 19 in which is stored an exclusive telephone number identifying the handset. Operationally this arrangement is analogous to the previous embodiment with the ancillary handset 5′ taking the place of the hand portable telephone 2. Thus, when the handset 5′ is connected, the mobile telephone 1 becomes operative with the telephone number in the handset NAM 19. In this case switch 15 is responsive to the connection of an ancillary handset, and disconnects NAM 14 when an ancillary handset 5′ is connected.

In a modified version of the Figure 2 embodiment the NAM 14 and switch 15 within the mobile unit may be omitted, the microprocessor 4 simply having direct read access to the NAM 19 in the handset 5′ whenever the handset is connected. The mobile unit 1 does not have a dedicated handset and can be regarded as a latent telephone in that it does not contain its own inherent identity and only becomes operable as a telephone when a handset containing its own NAM is connected thereto. This adds a new dimension of versatility to conventional mobile telephones since the same mobile unit can be used by any number of different subscribers equipped with appropriate NAM-containing handsets and the telephone as a whole assumes the identity of the particular handset which is connected for the duration of the connection.

It is noted that what is referred to herein as the mobile unit need not be contained within a single unitary housing. In particular the handset may be connected to a transceiver unit of the telephone via intermediate means, typically a cradle on which the handset is placed either when the telephone is not in use or when it is being used in a "handsfree" mode. The cradle is conventionally fixedly mounted within the passenger compartment of the vehicle for ready access to the handset, whilst the transceiver unit may be located in any convenient place within the vehicle, e.g. in the trunk or beneath one of the seats.

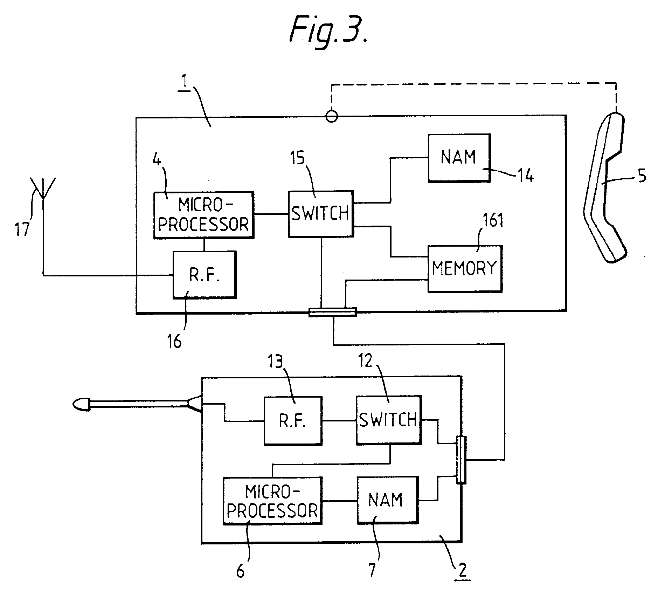

Figure 3 shows an arrangement in which the mobile telephone 1 also comprises a programmable memory 161 into which information from the NAM 7 in the hand portable telephone is downloaded automatically when the two telephones are connected together. In this case the microprocessor 4 is coupled to the memory 161 rather than directly to the NAM 7. The NAM 14 and memory 161 are coupled to the microprocessor 4 via a switch 15 which detects whether or not a hand portable telephone is connected. When a hand portable is connected, NAM 14 is isolated and memory 161 is coupled to microprocessor 4 so that the mobile telephone assumes the identity of the hand portable telephone 2. When the hand portable telephone is disconnected, memory 161 is isolated and NAM 14 is coupled to the microprocessor 4 so that the mobile telephone resumes its own inherent telephone number. Also, when the hand portable telephone is disconnected the memory 161 may be erased under the control of the microprocessor 4.

As a variation to the Figure 3 embodiment, the handportable telephone 2 may be substituted by an ancillary handset containing its own NAM as described with reference to the previous embodiments.

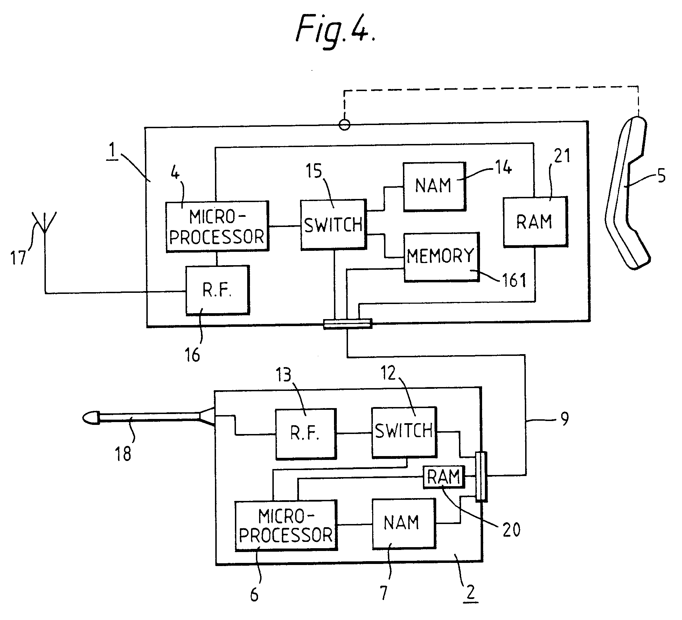

Figure 4 shows a modification of the arrangement in Figure 3 wherein the hand portable telephone 2 additionally has a random access memory or RAM 20 coupled to microprocessor 6 and the mobile telephone 1 has a corresponding RAM 21 coupled to microprocessor 4. Variable data may be entered into RAM 20 by the user, e.g. abbreviated dialling codes, frequently dialled telephone numbers, or other data. Wen the telephones 1 and 2 are connected together the data in RAM 20 is compared with data already held in RAM 21. Those memory locations which are not duplicated may be transferred automatically from RAM 20 to RAM 21 via data link 9 in known manner. Hence the mobile telephone 1 may take on not only the telephone number but other data stored in the hand portable telephone without rekeying.

In view of the foregoing description it will be evident that various modifications may be made within the scope of the present invention. For example, it is not necessary for the NAM 14 to be disconnected from the microprocessor 4 when a handportable telephone or ancillary handset is connected to the mobile, since both NAMs may remain coupled whereby the mobile telephone may simultaneously have two (or more) telephone numbers. In this case the switch 15 may be dispensed with. On the other hand the switch 15 need not itself be capable of detecting when an external device is connected to the mobile. Instead this function may be carried out by independent detection means well known to the person skilled in the art and the switch would then operate in response to the detection means, and switching may be effected under software control for example by the internal microprocessor. Furthermore, the NAMs in the telephones or the ancillary handset are not restricted to containing a single telephone number, but may contain several different numbers. As regards the data link between the two telephones this need not be a fixed-wire electrical link (as described), but may alternatively be an optical or radio data link.

Finally, it is noted that the invention is not limited to cellular radio telephone systems, but applies equally to any radio telephone system, for example the discrete area system known in the UK as CT2.

## Claims

1. A radio telephone for communicating on a radio system having at least one fixed site and a plurality of radio telephones, comprising host radio telephone means (1), handset means (5′), and means (3,8,9,10,11,24,27) for intercoupling the handset means (5′) and the host radio telephone means (1) whereby information may be transferred therebetween, wherein the handset means (5′) is operative for radio communication with a fixed site only when coupled to the host radio telephone means, characterised in that the handset means (5′) contains memory means (19) for storing a number identifying the handset means, and in that the intercoupling means (3,8,9,10,11,24,27) permit the identifying number to be transferred between the handset means and the host radio telephone means whereby the host radio telephone means (1) automatically assumes the identifying number of the handset means (5′) for communicating with a fixed site when the handset means and the host radio telephone means are intercoupled.

2. A radio telephone as claimed in claim 1, wherein the host radio telephone means (1) comprises memory means (14) in which is stored a number identifying the host telephone means.

3. A radio telephone as claimed in claim 2, including means (15) capable of detecting the connection of the handset means to the host telephone means, wherein the host telephone means comprises control circuitry (4) to which the memory means (14) of the host telephone means is coupled, and switching means (15) responsive to the detecting means which disconnect said memory means (14) of the host telephone means from the control circuitry when the handset means (5′) is coupled to the host telephone means (1).

4. A radio telephone as claimed in any of claims 1 to 3, wherein the host telephone means (1) comprises re-programmable memory means (161) for storing information from the memory means (19) in the telephone handset means, wherein information from the memory means (19) in the telephone handset means is transferred automatically to the re-programmable memory means (161) when the handset means is coupled to the host telephone means.

5. A radio telephone as claimed in claim 3 and claim 4, wherein the switching means (15) of the host telephone means (1) couples the re-programmable memory means (161) to the control circuitry (4) when the handset means (5′) is connected to the host telephone means.

6. A radio telephone as claimed in claim 4 or claim 5, wherein means are provided for erasing the information stored in the re-programmable memory means (161) automatically when the handset means is de-coupled from the host telephone means.

7. A radio telephone as claimed in any of the preceding claims, wherein the handset means (5′) comprises further memory means (20) for storing variable information, and the host telephone means comprises corresponding memory means (21), and means are provided for transferring information from the further memory means in the handset means to the corresponding memory means in the host telephone means automatically when the handset means is coupled to the host telephone means.

8. Host radio telephone means (1) for use in the radio telephone claimed in any of the preceding claims, the host telephone means being adapted to have coupled thereto a telephone handset means (5′) containing memory means (19) storing a number identifying the handset means, the host telephone means (1) being adapted to read the identifying number from the handset means whereby the host telephone means automatically assumes the identifying number of the handset means (5′) for communicating with a fixed site when the handset means and the host telephone means are intercoupled.

9. Telephone handset means (5′) for use in the radio telephone claimed in any of claims 1 to 7, adapted to be coupled to the host telephone means (1) and operative for communication with a fixed site only when coupled to the host telephone means, the handset means containing memory means (19) for storing a number identifying the handset means and further being adapted to provide access to the memory means (19) from outside the handset means to permit the identity number to be conveyed to the host radio telephone means.

**Patentansprüche**

1. Funktelefon zur Kommunikation in einem Funksystem, das wenigstens eine Feststelle hat und eine Vielzahl von Funktelefonen aufweist, enthaltend eine Wirtsfunktelefoneinrichtung (1), einen Handapparat (5′) und Einrichtungen (3, 8, 9, 10, 11, 24, 27) zum Verbinden des Handapparats (5′) und der Wirtsfunktelefoneinrichtung (1), wobei Informationen zwischen beiden übermittelt werden können, worin der Handapparat (5′) zur Funkkommunikation mit einer Feststelle nur betrieben werden kann, wenn er mit der Wirtsfunktelefoneinrichtung verbunden ist, dadurch gekennzeichnet, daß der Handapparat (5′) eine Speichereinrichtung (19) enthält, zum Speichern einer Nummer, die den Handapparat identifiziert, und dadurch, daß die Verbindungseinrichtungen (3, 8, 9, 10, 11, 24, 27) es der Identifiziernummer erlauben, zwischen den Handapparat und der Wirtsfunktelefoneinrichtung übertragen zu werden, wodurch die Wirtsfunktelefoneinrichtung (1) automatisch die Identifizierungsnummer des Handapparats (5′) annimmt, zum Kommunizieren mit einer Feststelle, wenn der Handapparat und die Wirtsfunktelefoneinrichtung verbunden werden.

2. Funktelefon nach Anspruch 1, wobei die Wirtsfunktelefoneinrichtung (1) Speichereinrichtungen (14) enthält, in die eine Nummer gespeichert ist, die die Wirtstelefoneinrichtung identifiziert.

3. Funktelefon nach Anspruch 2, enthaltend Einrichtungen (15), die in der Lage sind, die Verbindung des Handapparats mit der Wirtstelefoneinrichtung zu erkennen, wobei die Wirtstelefoneinrichtung Steuerschaltungen (4) enthält, mit der die Speichereinrichtung (14) der Wirtstelefoneinrichtung verbunden ist, und Schalteinrichtungen (15), die auf die Erkennungeinrichtungen reagieren, und die Verbindung der Speichereinrichtungen (14) der Wirtstelefoneirichtung von den Steuerschaltungen unterbrechen, wenn der Handapparat (5′) mit der Wirtstelefoneinrichtung (1) verbunden wird.

4. Funktelefon nach einem der Ansprüche 1 bis 3, wobei die Wirtstelefoneinrichtung (1) eine wiederprogrammierbare Speichereinrichtung (161) enthält zum Speichern von Informationen aus der Speichereinrichtung (19) in den Telefonhandapparat, wobei Informationen von der Speichereinrichtung (19) in der Telefonhandeinrichtung automatisch an die wiederprogrammierbare Speichereinrichtung (161) übertragen werden, wenn der Handapparat mit der Wirtstelefoneinrichtung verbunden wird.

5. Funktelefon nach Anspruch 3 und 4, wobei die Schalteinrichtung (15) der Wirtstelefoneinrichtung (1) die wiederprogrammierbare Speichereinrichtung (161) mit den Steuerschaltungen (4) verbindet, wenn der Handapparat (5′) mit der Wirtstelefoneinrichtung verbunden wird.

6. Funktelefon nach Anspruch 4 oder 5, wobei Einrichtungen vorgesehen sind zum automatischen Auslöschen der Informationen, die in der wiederprogrammierbaren Speichereinrichtung (161) gespeichert sind, wenn die Verbindung des Handapparats mit der Wirtstelefoneinrichtung gelöst wird.

7. Funktelefon nach einem der vorangehenden Ansprüche, wobei der Handapparat (5′) weitere Speichereinrichtungen (20) enthält zum Speichern variabler Informationen, und wobei die Wirtstelefoneinrichtung entsprechende Speichereinrichtungen (21) enthält, und wobei Einrichtungen vorgesehen sind zum automatischen Übertragen von Informationen von der weiteren Speichereinrichtung des Handapparats an die entsprechenden Speichereinrichtungen in der Wirtstelefoneinrichtung, wenn der Handapparat mit der Wirtstelefoneinrichtung verbunden wird.

8. Wirtstelefoneinrichtung (1) zur Verwendung in dem Funktelefon nach einem der vorangehenden Ansprüche, wobei die Wirtstelefoneinrichtung dazu eingerichtet ist, mit einem Telefonhandapparat (5′) verbunden zu werden, der Speichereinrichtungen (19) enthält, die eine Nummer speichern, die den Handapparat identifizieren, wobei die Wirtstelefoneinrichtung (1) dazu eingerichtet ist, die identifizierende Nummer von dem Handapparat zu lesen, wobei die Wirtstelefoneinrichtung automatisch die identifizierende Nummer des Handapparats (5′) annimmt zum Kommunizieren mit einer Feststelle, wenn der Handapparat und die Wirtstelefoneinrichtung miteinander verbunden sind.

9. Telefonhandapparat (5′) zur Verwendung in dem Funktelefon nach einem der Ansprüche 1 bis 7, der dazu eingerichtet ist, mit der Wirtstelefoneinrichtung (1) verbunden zu werden und der zur Kommunikation mit einer Festelle nur dann betrieben werden kann, wenn er mit der Wirtstelefoneinrichtung verbunden ist, wobei der Handapparat Speichereinrichtungen (19) enthält zum Speichern einer Nummer, die den Handapparat identifiziert, und weiterhin dazu eingerichtet ist, Zugang zu der Speichereinrichtung (19) von außerhalb des Handapparats herzustellen, um zuzulassen, daß die Identitätsnummer der Wirtstelefoneinrichtung zugeführt wird.

## Revendications

1. Radiotéléphone pour communiquer sur un système radiotéléphonique ayant au moins un site fixe et une pluralité de radiotéléphones, comprenant un moyen radiotéléphonique hôte (1), un moyen à combiné (5′), et un moyen (3,8,9,10,11,24,27) pour interconnecter le moyen à combiné (5′) et le moyen radiotéléphonique hôte (1), des informations pouvant ainsi être transférées entre eux, dans lequel le moyen à combiné (5′) est capable d'établir des communications radio avec un site fixe seulement lorsqu'il est relié au moyen radiotéléphonique hôte, caractérisé en ce que le moyen à combiné (5′) contient un moyen à mémoire (19) pour stocker un numéro identifiant le moyen à combiné, et en ce que le moyen d'interconnexion (3,8,9,10,11,24,27) permet de transférer le numéro d'identification entre le moyen à combiné et le moyen radiotéléphonique hôte, ce par quoi le moyen radiotéléphonique hôte (1) adopte automatiquement le numéro d'identification du moyen à combiné (5′) pour communiquer avec un site fixe, lorsque le moyen à combiné et le moyen radiotéléphonique hôtes sont interconnectés.

2. Radiotéléphone selon la revendication 1, dans lequel le moyen radiotéléphonique hôte (1) comprend un moyen à mémoire (14) dans lequel est stocké un numéro identifiant le moyen téléphonique hôte.

3. Radiotéléphone selon la revendication 2, comportant un moyen (15) capable de détecter la connexion du moyen à combiné au moyen téléphonique hôte, dans lequel le moyen téléphonique hôte comprend un circuit de commande (4) auquel le moyen à mémoire (14) du moyen téléphonique hôte est relié, et un moyen de commutation (15) répondant au moyen de détection en déconnectant ledit moyen à mémoire (14) appartenant au moyen téléphonique hôte, du circuit de commande, lorsque le moyen à combiné (5′) est relié au moyen téléphonique hôte (1).

4. Radiotéléphone selon l'une quelconque des revendications 1 à 3, dans lequel le moyen téléphonique hôte (1) comprend un moyen à mémoire reprogrammable (161) pour stocker une information provenant du moyen à mémoire (19) dans le moyen à combiné téléphonique, dans lequel l'information provenant du moyen à mémoire (19) se trouvant dans le moyen à combiné téléphonique, est transférée automatiquement vers le moyen à mémoire reprogrammable (161) lorsque le moyen à combiné est relié au moyen téléphonique hôte.

5. Radiotéléphone selon la revendication 3 et la revendication 4, dans lequel le moyen de commutation (15) du moyen téléphonique hôte (1) relie le moyen à mémoire reprogrammable (162) au circuit de commande (4) lorsque le moyen à combiné (5') est connecté au moyen téléphonique hôte.

6. Radiotéléphone selon la revendication 4 ou la revendication 5, dans lequel des moyens sont prévus pour effacer automatiquement l'information stockée dans le moyen à mémoire reprogrammable (161) lorsque le moyen à combiné est déconnecté du moyen téléphonique hôte.

7. Radiotéléphone selon l'une quelconque des revendications précédentes, dans lequel le moyen à combiné (5') comprend un moyen à mémoire supplémentaire (20) pour stocker des informations variables, et dans lequel le moyen téléphonique hôte comprend un moyen à mémoire correspondant (21), et dans lequel des moyens sont prévus pour transférer automatiquement une information du moyen à mémoire supplémentaire se trouvant dans le moyen à combiné au moyen à mémoire correspondant se trouvant dans le moyen téléphonique hôte, lorsque le moyen à combiné est relié au moyen téléphonique hôte.

8. Moyen radiotéléphonique hôte (1) pour utilisation dans le radiotéléphone revendiqué dans l'une quelconque des revendications précédentes, le moyen téléphonique hôte étant adapté à ce qu'il lui soit connecté un moyen à combiné téléphonique (5') contenant un moyen à mémoire (19) stockant un numéro identifiant le moyen à combiné, le moyen téléphonique hôte (1) étant adapté à lire le numéro d'identification du moyen à combiné, ce par quoi le moyen téléphonique hôte adopte automatiquement le numéro d'identification du moyen à combiné (5') pour communiquer avec un site fixe lorsque le moyen à combiné et le moyen téléphonique hôte sont interconnectés.

9. Moyen à combiné téléphonique (5') pour utilisation dans le radiotéléphone revendiqué dans l'une quelconque des revendications 1 à 7, adapté à être relié au moyen téléphonique hôte (1) et ayant pour fonction de ne communiquer avec un site fixe que lorsqu'il est relié au moyen téléphonique hôte, le moyen à combiné contenant un moyen à mémoire (19) pour stocker un numéro identifiant le moyen à combiné et étant en outre adapté à fournir un accès au moyen à mémoire (19) de l'extérieur du moyen à combiné afin de permettre le transfert du numéro d'identité vers le moyen radiotéléphonique hôte.

# Fig.1.

# Fig.2.

## Fig.3.

# Fig.4.